(19) Europäisches Patentamt
European Patent Office
Office européen des brevets

(11) **EP 1 589 354 B1**

(12) **FASCICULE DE BREVET EUROPÉEN**

(45) Date de publication et mention
de la délivrance du brevet:
**26.08.2015 Bulletin 2015/35**

(51) Int Cl.:
**G01S 17/89** *(2006.01)* **G01C 15/00** *(2006.01)*
**G01B 11/25** *(2006.01)*

(21) Numéro de dépôt: **05103062.5**

(22) Date de dépôt: **18.04.2005**

(54) **Système de mesure à trois dimensions**

Vorrichtung zur Messung in drei Dimensionen

System for three-dimensional measurements

(84) Etats contractants désignés:
**AT BE BG CH CY CZ DE DK EE ES FI FR GB GR HU IE IS IT LI LT LU MC NL PL PT RO SE SI SK TR**

(30) Priorité: **20.04.2004 FR 0404161**

(43) Date de publication de la demande:
**26.10.2005 Bulletin 2005/43**

(73) Titulaire: **AIRBUS OPERATIONS**
**31060 Toulouse (FR)**

(72) Inventeur: **Taffet, Bruno**
**31100 Toulouse (FR)**

(74) Mandataire: **Ahner, Philippe et al**
**BREVALEX**
**95, rue d'Amsterdam**
**75378 Paris Cedex 8 (FR)**

(56) Documents cités:
**EP-A- 0 358 559       WO-A-99/60335**
**DE-A- 19 610 756       DE-A1- 19 543 299**
**FR-A1- 2 630 539       US-B1- 6 590 640**

**Description**

**DOMAINE TECHNIQUE**

L'invention concerne un système de mesure à trois dimension, qui peut être utilisé notamment pour la validation d'un cockpit d'aéronef au sol.

**ÉTAT DE LA TECHNIQUE ANTÉRIEURE**

Lors de conception de maquettes de cockpit ou de structures de simulateurs à partir de définitions CAO (« conception assistée par ordinateur »), on peut rencontrer ,en cours de développement, des incohérences entraînant des difficultés d'intégration des éléments entre eux, par exemple :

- Le cockpit peut être réalisé d'après des définitions CAO s'étalant dans le temps. Des incohérences liées aux évolutions de ces définitions apparaissent alors. A chaque réception d'une nouvelle définition CAO, se pose la question suivante : peut-on intégrer la nouvelle structure d'aménagement ainsi définie dans le « squelette de cockpit » actuel ?
- Une fois les cockpits réalisés et les équipements intégrés peuvent se poser des problèmes d'ergonomie. Un équipement peut paraître moins accessible que prévu dans l'aménagement de la maquette numérique correspondante. Comment valider le cockpit réalisé par rapport à des définitions numériques sources ?
- Si des essais montrent qu'une zone du cockpit pose des problèmes d'accessibilité et/ou d'ergonomie, comment mesurer / photographier / balayer cette zone de façon précise, avant de comprendre comment re-travailler celle-ci numériquement ?
- Les moyens de balayage (« scanning ») 3D (« trois dimensions ») existant sur le marché sont limités. On peut manuellement prendre des mesures de quelques points, et les comparer manuellement à d'autres points sur la maquette numérique. Mais ces moyens ne permettent pas une reconstitution de surfaces définies par des milliers de points de mesure dont la fiabilité est assurée par un mécanisme de pointage fin.

Pour résoudre ces problèmes l'invention a pour objet de proposer un procédé de validation d'un cockpit d'aéronef au sol mettant en oeuvre un système de mesure à trois dimensions pilotable, évolutif par adjonction ou modification d'algorithmes de contrôle et couplable à des logiciels de CAO, basé sur des technologies existantes au niveau industriel ou au niveau R&D (Recherche et développement), permettant la reconstitution d'une surface réelle, notamment pour la validation de cockpits d'avion.

Nous allons analyser ci-dessous l'enseignement de plusieurs documents de l'art antérieur.

Le brevet US 6 590 640 décrit un dispositif de mesure à trois dimensions. Ce dispositif comprend un émetteur qui peut émettre un signal vers une cible. Une partie du signal émis peut être reçue par un récepteur. Un processeur permet de corréler les informations reçues de l'émetteur et du récepteur. L'émetteur et le récepteur peuvent être assemblés dans une même unité de télémétrie. Une telle unité, peut être utilisé dans une configuration théodolite électronique.

La demande de brevet WO 99/60335 décrit un système de surveillance qui peut mesurer une distance, un angle de gisement et d'inclinaison vers une cible. Ce système comprend un télémètre, une caméra et un processeur de traitement des signaux. Ce système peut être monté sur un ensemble deux axes, chaque axe étant équipé d'un codeur angulaire.

La demande de brevet DE 19543299 décrit un procédé de mesure d'objets statiques, tels que des bâtiments ou des machines.

La demande de brevet FR 2 630 539 décrit un procédé de levés de métrés de bâtiments par télémétrie, en utilisant du matériel normalement utilisé en topographie extérieure, pour la mesure de métrés sur courte distance à l'intérieur de bâtiment et de l'associer à un programme de conception assisté par ordinateur, de façon à reproduire les enveloppes et les éléments constitutifs d'une pièce sous toute forme souhaitée. Pour cela, on effectue avec le télémètre les mesures des coordonnées polaires de trois points quelconques, pris sur chaque surface, constituant l'enveloppe à partir de la même station. On calcule alors la position de chaque plan, puis l'intersection de tous les plans pris deux à deux pour définir les arêtes du volume considéré. On repère un point de tout élément d'équipement et on l'associe aux dimensions préalablement enregistrées dudit élément. On positionne les pièces les unes par rapport aux autres en choisissant une base de points de référence commune à au moins deux pièces.

**EXPOSÉ DE L'INVENTION**

L'invention concerne un procédé de validation d'un cockpit d'aéronef au sol mettant en oeuvre un système de mesure à trois dimensions, permettant la reconstitution tridimentionnelle en azimut, élévation et distance d'une surface réelle, comprenant une partie matérielle comportant un ensemble mobile deux axes azimut/élévation grand angle associé à un dispositif de mesure de distance montés sur une partie fixe, chaque axe étant équipé d'un codeur angulaire restituant à tout moment le sens d'une visée, et une partie logicielle comportant une partie commande en entrée et une partie acquisition en sortie, dans lequel l'ensemble mobile deux axes comprend deux parties permettant respectivement une rotation azimut autour d'un axe et une rotation élévation autour d'un autre axe, dans lequel chaque partie comprend un moteur et un codeur angulaire, dans lequel la partie logicielle comprend un interface homme-machine permettant un choix de paramètres de mesure et un post-traitement, et un module de pilotage comprenant, pour chaque axe, un comparateur qui permet d'effectuer la comparaison entre un angle réel issu d'un codeur angulaire et une consigne temps réel issue de l'interface homme - machine, un controleur recevant le signal de sortie du comparateur et un module de pilotage du moteur correspondant qui délivre la commande des phases moteur, le procédé étant caractérisé en ce qu'il comprend :

- une étape de positionnement de la partie matérielle du système dans le cockpit,
- une étape de calibration de la position du système, en visant un point connu dans le cockpit et en mesurant trois paramètres : azimut, élévation et distance,
- une étape de mise en correspondance de points de mesure d'une surface réelle du cockpit d'aéronef au sol et les points de mesure de la même surface de cockpit d'aéronef au sol qui ont déjà été définis par la définition CAO d'origine,
- une étape d'entrée de paramètres de mesure : angle de mesure, précision demandée, format d'enregistrement,
- une étape de validation du cockpit après comparaison de données mesurées à l'aide du dispositif de mesure de distance et des deux codeurs angulaires et de consignes temps réel issues de l'interface homme-machine.

Avantageusement ce procédé comprend :

- une nouvelle étape de positionnement et de calibration en positionnant la partie matérielle en une autre position du cockpit.

On peut positionner la partie matérielle du système sur les parois ou le plafond du cockpit par un dispositif à ventouse.
Le procédé de l'invention permet notamment de résoudre les problèmes suivantes :

- réaliser une reconstitution tridimensionnelle à partir d'un point fixe, trois coordonnées de mesure par point étant donc nécessaires, en mesurant en chaque point de mesure son azimut par rapport à un point de référence, son élévation par rapport à ce point de référence et sa distance,
- obtenir une bonne précision de la mesure : selon l'application concernée (par exemple reconstitution d'un cockpit, reconstitution d'un bouton, reconstitution d'un bâtiment) et la distance entre le point de référence et la zone de mesure (pouvant varier de quelques dizaines de centimètres à plusieurs dizaines de mètres, pour des raison d'encombrement ou de champs de vision nécessaire) la précision de mesure requise peut varier de façon importante,
- réaliser une comparaison CAO : L'utilisation des mesures sous l'environnement CAO, ayant permis la réalisation physique d'une pièce,permet de valider celle-ci. A l'inverse, ce procédé peut être utilisé pour créer une définition CAO à partir d'une pièce réelle donnée pour correction, évolution de celle-ci, et création d'une nouvelle pièce.

Le système de pointage deux axes piloté de l'invention permet de balayer une surface ou un ensemble de surfaces non planes aux formes complexes à +/- 180° selon deux axes azimut et élévation. Trois mesures suffisent à la reconstitution tridimensionnelle : azimut, élévation et distance. Le pilotage d'un tel système par ordinateur permet à l'utilisateur les paramétrages suivants de la mesure : choix de la fenêtre angulaire de mesure, choix du nombre de points , création d'un fichier IGES (« .igs ») importable dans tous logiciels de CAO.
La qualité des éléments mécaniques composant le système de l'invention permet de jouer sur :

- la précision de pointage et donc la précision de la mesure (qualité des roulements, caractéristiques des moteurs pas à pas),
- la plage de mesure : une configuration en « L » avec deux ensembles moteur+roulement+cable permet des mesures à +/-180° selon chaque axe. Autrement dit, n'importe quelle direction peut être visée dans l'espace.

La pilotabilité est une caractéristique importante de ce système. On peut jouer grâce à une interface homme-machine sur les paramètres suivants :

- zone physique de mesure : par exemple, on peut reconstituer une image tridimensionnelle du cockpit, en choisissant judicieusement le nombre de points de mesure pour trouver le bon compromis entre temps de mesure et bonne résolution,

- choix du type de balayage : balayage horizontal, vertical, aléatoire, intelligent en prenant plus de points de mesure dans les zones de gradient important (peu de points si la zone est relativement plate, plus de points lorsque le relief s'accentue)
- choix de la vitesse : ce paramètre est lié au choix du balayage,
- choix du contrôleur permettant de réaliser un profil de balayage commandé par l'utilisateur : par exemple un contrôleur PID (Proportionnel Intégral Dérivé) ou un autre contrôleur plus complexe pouvant s'avérer plus adapté au profil de balayage et sa vitesse,
- mise en oeuvre d'algorithmes de compensation de défauts mécaniques pour améliorer encore la précision de pointage (algorithmes de compensation de frottements des roulements ou algorithmes de compensation d'harmoniques moteur comme les couples de Cogging ou couple de Ripple) : de tels algorithmes appliqués à des contrôleurs sur des mécanismes utilisant des composants de haute technologie permettent d'atteindre des précisions de pointage angulaire de l'ordre de $10^{-6}$ radian, ce qui peut être utile non pas pour améliorer encore la définition d'une mesure de surface mais pour conserver une même précision en mesurant de plus loin.

## BRÈVE DESCRIPTION DES DESSINS

La figure 1 illustre l'architecture générale du système de l'invention.
La figure 2 illustre un mécanisme deux axes avec un dispositif de mesure de distance selon l'invention.
La figure 3 illustre le principe du mécanisme de passage de câble selon l'invention.
La figure 4 illustre le modèle de frottement de Lugre.
La figure 5 illustre les couples de Cogging et de Ripple lors d'une poursuite à 5%.

## EXPOSÉ DÉTAILLÉ DE MODES DE RÉALISATION PARTICULIERS

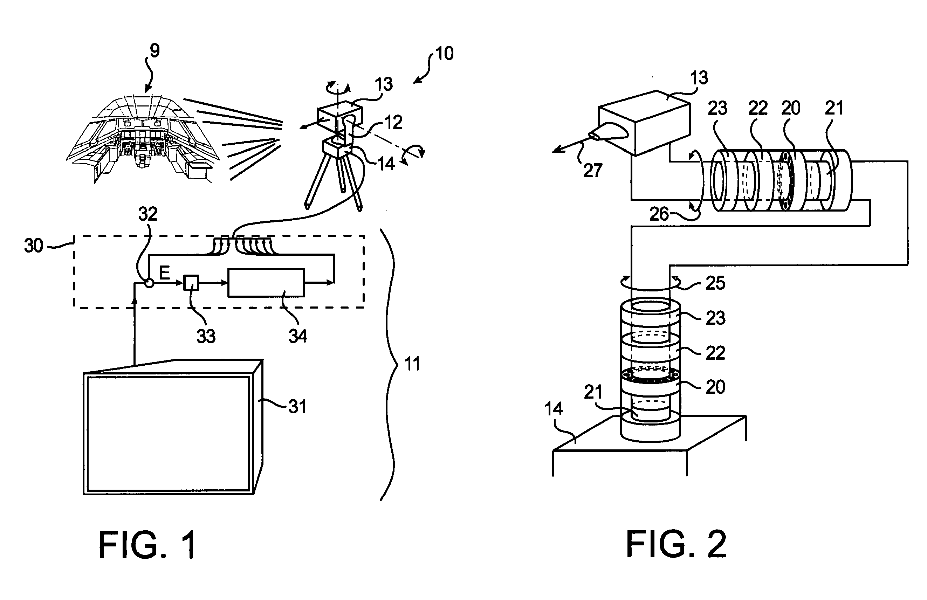

Comme illustré sur la figure 1, le système de mesure de l'invention comprend une partie matérielle 10 et une partie logicielle 11.

La zone de mesure 9 considérée ici est le cockpit d'un aéronef au sol.

La partie matérielle 10 comprend un ensemble mobile deux axes azimut/élévation grand angle 12 associé à un dispositif de mesure de distance 13 montés sur une partie fixe 14, par exemple un trépied.

Dans cet ensemble mobile 12 chaque axe est équipé d'un codeur angulaire 22, par exemple optique, restituant à tout moment le sens d'une visée. Le dispositif de mesure de distance 13 est par exemple un dispositif à laser.

L'ensemble mobile 12 peut, avantageusement, avoir la forme d'un « L », comme illustré sur la figure 1, qui permet des grands débattements angulaires selon les deux axes (pratiquement +/- 180° sur chaque axe, la butée étant définie par le jeu laissé par le passage de câbles).

Comme illustré sur la figure 2 la rotation autour de chaque axe de cet ensemble deux axes 12 est assurée par quatre modules :

- des roulements 20 permettant le guidage entre une première et une seconde partie : d'une part entre la partie fixe 14 et ledit ensemble deux axes 12 et d'autre part entre ledit ensemble 12 et dispositif de mesure de distance 13,
- un moteur 21, par exemple pas-à-pas, permettant la rotation de la première partie par rapport à la seconde,
- un codeur angulaire 22 permettant de restituer à la partie logicielle la position autour de cet axe,
- un module de passage de câble 23 qui,par enroulement, autorise des débattements importants.

Sur cette figure 2 sont également représentées :

- la rotation azimut 25,
- la rotation élévation 26,
- la ligne de visée 27 du dispositif de mesure de distance 13.

Comme illustré sur la figure 1 la partie logicielle 11 comprend un module de pilotage 30 et un interface homme-machine (IHM) 31.

Le module de pilotage 30 comprend :

- un comparateur 32 qui reçoit d'une part les angles réels Azimut et élévation et d'autre part, issus de l'interface 31, les consignes temps réel azimut et élévation, et qui délivre un signal erreur E,

- un contrôleur 33, par exemple PID, qui reçoit ce signal erreur E et qui délivre un couple,
- un modèle 34 de pilotage du moteur 21 qui délivre la commande des phases moteurs.

L'interface homme-machine 31 permet :

- un choix des paramètres de mesure :

  • fenêtre de poursuite (« Tracking »),
  • nombre de points,
  • format d'enregistrement des données,
  • vitesse de balayage,

- un post-traitement :

  • comparaison avec des données théoriques (CAO),
  • comparaison avec d'autres mesures,
  • retouches
  • fusion avec d'autres mesures.

La partie logicielle 11 se décompose en deux parties : une partie commande en entrée et une partie acquisition en sortie.

En ce qui concerne la partie commande, le choix ou le développement de logiciels de commande peut rendre le système de l'invention très flexible et très performant. On peut ainsi utiliser l'atelier dSpace ® sous Matlab ®/Simulink ® qui autorise une infinité de possibilité de pilotage du système. On peut ainsi avoir la procédure de commande suivante :

- l'interface 31 demande à l'utilisateur de calibrer la position du système,
- l'utilisateur donne les paramètres spécifiques de la mesure :

  1) angle de mesure : par exemple azimut entre - 67° et -45° ; élévation entre 18° et +9°. Si l'utilisateur ne connaît pas les limites précises de la zone qu'il veut mesurer, ces limites peuvent être mesurées en déplaçant manuellement la partie matérielle 10, en contrôlant avec le dispositif de mesure de distance 13. Quatre points de mesure suffisent pour définir les limites de cette zone,
  2) précision demandée : l'utilisateur donne la précision maximum entre chaque point, par exemple 1 millimètre. Le contrôleur 33 réalise une adaptation automatique pour obtenir cette précision : on peut choisir ce contrôleur (Proportionnel Inverse Dérivé (PID) ou autre), choisir ou non des algorithmes de compensation, choisir la vitesse de balayage, choisir le principe de balayage (de droite à gauche, ou de haut en bas ou autre),
  3) format d'enregistrement : IGEF compatible CATIA ® ou autre...

En ce qui concerne la partie acquisition, les trois paramètres restitués en chaque point de mesure (les deux angles des codeurs optiques et la distance des dispositifs de mesure de distance) sont stockés dans un format choisi, par exemple IGEF. Les données 3D enregistrées peuvent être directement superposable sous CATIA ® aux données d'origine auxquelles elles doivent correspondre.

Une telle façon de procéder permet à la fois une validation d'une pièce fabriquée et une validation de celle-ci dans un cockpit.

Dans un exemple de mise en oeuvre du système de l'invention, on a les étapes préliminaires suivantes :

- Positionnement du système de l'invention dans le cockpit : typiquement on peut placer le système au centre du cockpit à l'arrière du siège troisième homme, qui permet de viser presque n'importe quelle zone du cockpit. Mais dans le cas où l'on veut mesurer une zone de faible dimension, pour obtenir une précision suffisante, on peut déplacer le trépied 14 et adapter sa hauteur afin de rapprocher le système de la zone de mesure. Une position différente peut être utile pour mesurer des surfaces cachées par d'autres. Par exemple si l'on souhaite mesurer la partie centrale de la planche de bord et que l'on est gêné par les manettes de gaz.
- Calibration : pour calibrer la position du système, on vise alors un point parfaitement connu dans le cockpit, comme par exemple une boule parmi les trois boules de visée pour le positionnement oeil pilote. Trois paramètres sont ainsi mesurés en fonction de la position du trépied et de la position du mécanisme de mesure sur le trépied : Azimut (en degré), Élévation (en degré) et distance (en mm). Enfin, grâce au logiciel d'acquisition, on fait correspondre ce point de mesure avec le point CAO correspondant à l'objet qui a été visé.
- Le positionnement et la calibration peuvent être recommencés en positionnant la partie matérielle 10 n'importe où dans le cockpit afin de pouvoir mesurer des surfaces cachées, comme celles cachées par les sièges par exemple.

- Il est également possible de positionner l'ensemble mécanisme deux axes associé au dispositif de mesure sur des parois latérales ou de plafond par un dispositif à ventouse, afin d'accéder à des zones cachées, ou pour mesurer plus précisément des zones horizontales, comme le plateau du pylône comportant nombreux équipements ou les banquettes latérales.

Le système de l'invention permet d'obtenir les avantages suivants :

- Il permet de reconstituer une définition CAO du cockpit d'un avion à partie d'un cockpit réel, à l'inverse de ce qui se fait généralement, ou d'obtenir un ensemble physique à partir d'une définition CAO. Cette reconstitution se fait au format IGEF. On peut alors superposer une telle reconstitution sous CATIA ® à la définition CAO d'origine. Une telle méthode permet d'améliorer la validation de maquettes de cockpit ou de simulateurs de vol.
- Il autorise toutes les libertés à l'utilisateur lors d'une mesure : choix de la zone physique de la mesure (sa position, sa taille), choix de la précision de la mesure par choix de l'algorithme ou du nombre de points de mesure par unité de surface.
- Il utilise un logiciel de pilotage modulaire permettant de changer les algorithmes de pilotage ou de contrôle des défauts du système en fonction de l'application et de la précision souhaitée.

On va à présent considérer plus précisément un exemple de réalisation de la partie matérielle et de la partie logicielle du système de l'invention.

## Partie matérielle

L'ensemble mobile deux axes 12 associé à un dispositif de mesure de distance 13 est monté sur un trépied 14, qui permet de lui assurer une bonne assise, un bon réglage et une bonne stabilité.

Ce trépied 14 offre les fonctions suivantes :

- Réglage indépendant de la longueur de chaque pied
- Bulles de niveaux latérales pour le réglage du zéro en azimut

Sur ce trépied ainsi réglé vient se positionner le mécanisme de pointage deux-axes 12, comme illustré sur la figure 2.

L'ensemble mobile deux axes 12 est un mécanisme en forme de bras en L, comportant à chaque extrémité de branche du L un ensemble identique permettant le rotation autour d'un axe. Cet ensemble est composé des sous-ensembles suivants :

- des roulements 20 permettant un guidage selon un seul degré de liberté en rotation,
- un moteur continu sans balai 21, à 2 ou 3 phases, dont les principales caractéristiques sont la vitesse, et la précision d'une mesure pendant un balayage de zone,
- un codeur angulaire optique 22, dont le nombre de bits correspondant au nombre de pistes optiques gravées donne directement la précision de la mesure angulaire. Cette mesure est indispensable à la réalisation de l'asservissement du profil de balayage choisi par l'utilisateur
- un mécanisme de passage de câble ou de nappe de câbles 23 rangés par enroulement périphérique, qui permettent de faire le lien entre l'interface 31 et le dispositif de mesure 13.

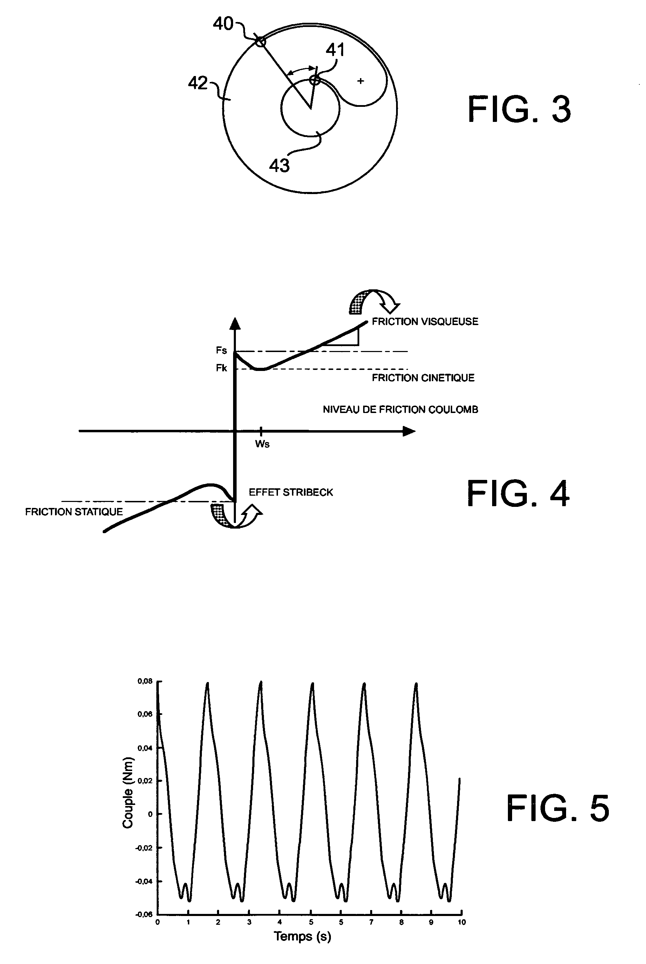

Le principe du mécanisme de passage de câble 23, dans lequel le rotor porte le dispositif de mesure, est illustré sur la figure 3, sur laquelle sont représentés les fixations 40 et 41 respectivement sur le stator 42 et sur le rotor 43.

Ces deux ensembles, pour le système de pointage, sont donc réalisés selon le même principe et avec les mêmes composants. Le détecteur de mesure de distance 13 est un boîtier permettant de mesurer la distance par laser, qui est disponible sur le marché, et qui peut comporter une sortie informatique permettant un transfert vers un terminal de type PC (« personal computer »).

## Partie logicielle

Les deux articulations de l'ensemble mobile deux axes 12 sont contrôlées par ordinateur. Les codeurs angulaires 22 permettent de connaître avec précision les deux positions angulaires. Ces mesures de positions sont comparées en temps réel à la consigne du profil de balayage commandé par l'utilisateur. Si l'application ne nécessite pas la mise en oeuvre d'algorithmes complexes de compensation d'harmoniques moteur ou de frottements des roulements ou autre défaut, le principe du pilotage est celui représenté sur la figure 1. Un simple contrôleur PID 33 peut être mis en place pour chaque axe de rotation.

La boucle de contrôle est alimentée par le profil de balayage commandé par l'interface 31, mise en place sur le même terminal.

Les données mesurées peuvent être enregistrées par création d'un fichier IGES (« .igs ») importable dans tout logiciel de CAO, dont le logiciel CATIA ® qui peut être utilisé pour les définitions cockpit.

**Performances d'un tel système**

Les performances du système de l'invention sont grandement liées à la qualité des différents éléments mécaniques :

- Roulements 20 : qualité d'usinage des billes, des pistes de guidage, du graissage...
- Moteurs 21 : couple de Cogging, couple de Ripple, nombre de pas, avec ou sans balais.
- Codeurs angulaires 22 : leur nombre de pistes optiques donne directement la précision de mesure, indispensable à un bon asservissement.

Elles sont directement liées aussi à la vitesse du balayage.

En utilisant les technologies actuelles, on estime à 0.01° de précision de pointage à 0.002°/s de vitesse de balayage, ou à 0.2° de précision à 0.1°/s de vitesse de balayage.

Pour une application de reconstitution tridimensionnelle d'un cockpit, la précision angulaire correspondant à 0,1 mm à 3 m de distance est de $2.10^{-3}$ degrés. Si les caractéristiques des éléments mécaniques ne permettent pas d'atteindre une telle précision, on peut mettre en oeuvre des algorithmes bien connus de l'homme du métier permettant de compenser les défauts. Ces algorithmes peuvent être des algorithmes :

- de compensation de frottement,
- de compensation des harmoniques moteurs,
- d'amélioration du contrôleur de profil de balayage.

Selon le nombre d'algorithmes mis en oeuvre, selon leur complexité, on peut atteindre des précisions de pointage de l'ordre $5.10^{-5}$ degrés en pointage très fin (très faibles vitesse de balayage). Cet ordre de grandeur est atteint par des système de pointage de satellites pour des communication inter-satellites.

Les performance du dispositif de mesure de distance à laser 13 sont les suivantes, en reprenant les données constructeur des lasermètres portables du marché :

- plage de mesure : de 0,2 à 200m,
- durée d'une mesure en continu : de 0,16 à 1 s selon la distance. Ce paramètre influe directement sur le choix de la vitesse de balayage en fonction du nombre de points choisi.

En ce qui concerne la compensation de frottements il existe plusieurs techniques basées ou non sur la connaissance d'un modèle de frottement à compenser. La figure 4 illustre un modèle possible, qui est le modèle de LUGRE :

Les différents algorithmes de compensation de frottement sont illustrés dans le tableau suivant.

| | |
|---|---|
| Algorithmes non basés sur la connaissance d'un modèle | PID |
| | Structure Variable VSS |
| | Commande impulsive adaptative (AM/FM) |
| Algorithmes Basés sur un Modèle de frottement | Programmation du gain |
| | Compensation de friction fixée (FF/FB) |
| | Compensation de friction adaptative (FF/FB) |

En ce qui concerne la compensation d'harmonique moteur, les défauts de couple auxquels on s'intéresse ici sont des harmoniques d'angle. On a donc ici un défaut harmonique dont la fréquence se déplace avec la vitesse. Leur fréquence est égale à leur fréquence spatiale multipliée par la vitesse angulaire exprimée en tours par seconde.

Comme illustré sur la figure 5, qui représente les couples de Cogging et de Rippple lors d'une poursuite à 5°/s, les principaux défauts du moteur sont des couples harmoniques de l'angle du rotor. A vitesse angulaire constante, on observe des harmoniques du temps.

Une compensation par filtre de Kalman permet de creuser sur la fonction de rejection des défauts moteur, un trou se déplaçant avec la vitesse.

Les couples perturbateurs que l'on cherche à compenser ici sont des harmoniques de l'angle. On peut les modéliser par les équations d'états suivantes :

$$\frac{dX}{d\theta} = \begin{bmatrix} 0 & 1 \\ -\omega^2 & 0 \end{bmatrix} X$$

la première composante de l'état représente le couple perturbateur, la deuxième sa dérivée par rapport à l'angle. La fréquence spatiale sans dimension $\omega$ est connue par donnée constructeur. On construit donc l'observateur suivant :

$$\begin{cases} \frac{d\hat{X}}{d\theta} = A\hat{X} + K\left(Y - C\hat{X}\right) \\ A = \begin{bmatrix} 0 & 1 \\ -\omega^2 & 0 \end{bmatrix} C = \begin{bmatrix} 1 & 0 \end{bmatrix} K = \begin{bmatrix} \alpha \\ \beta \end{bmatrix} \end{cases}$$

le filtre ainsi constitué est un filtre étroit autour de la fréquence spatiale $\omega$.

La compensation d'harmonique par filtre de Kalman permet un gain croît avec la vitesse. A 10°/s, ce gain peut atteindre un facteur 10.

## Revendications

1. Procédé de validation d'un cockpit d'aéronef au sol mettant en oeuvre un système de mesure à trois dimensions, permettant la reconstitution tridimentionnelle en azimut, élévation et distance d'une surface réelle, comprenant une partie matérielle comportant un ensemble mobile deux axes azimut/élévation grand angle (12) associé à un dispositif de mesure de distance (13) montés sur une partie fixe (14), chaque axe étant équipé d'un codeur angulaire (22) restituant à tout moment le sens d'une visée, et une partie logicielle comportant une partie commande en entrée et une partie acquisition en sortie, dans lequel l'ensemble mobile deux axes (12) comprend deux parties permettant respectivement une rotation azimut (25) autour d'un axe et une rotation élévation (26) autour d'un autre axe, dans lequel chaque partie comprend un moteur (21) et un codeur angulaire (22), dans lequel la partie logicielle (11) comprend un interface homme-machine (31) permettant un choix de paramètres de mesure et un post-traitement, et un module de pilotage (30) comprenant, pour chaque axe, un comparateur (32) qui permet d'effectuer la comparaison entre un angle réel issu d'un codeur angulaire (22) et une consigne temps réel issue de l'interface homme - machine (31), un controleur (33) recevant le signal de sortie du comparateur et un module de pilotage du moteur (21) correspondant qui délivre la commande des phases moteur le procédé étant **caractérisé en ce qu'**il comprend :

   - une étape de positionnement de la partie matérielle du système dans le cockpit,
   - une étape de calibration de la position du système, en visant un point connu dans le cockpit et en mesurant trois paramètres : azimut, élévation et distance,
   - une étape de mise en correspondance de points de mesure d'une surface réelle du cockpit d'aéronef au sol et les points de la même surface du cockpit d'aéronef au sol qui ont été déjà définis par la définition CAO d'origine,
   - une étape d'entrée de paramètres de mesure : angle de mesure, précision demandée, format d'enregistrement,
   - une étape de validation du cockpit après comparaison de données mesurées à l'aide du dispositif de mesure de distance (13) et des deux codeurs angulaires (22) et de consignes temps réel issues de l'interface homme-machine (31).

2. Procédé selon la revendication 1, comprenant :

   - une nouvelle étape de positionnement et de calibration en positionnant la partie matérielle en une autre position du cockpit.

3.	Procédé selon la revendication 1, dans lequel on positionne la partie matérielle du système sur les parois ou le plafond du cockpit par un dispositif à ventouse.

**Patentansprüche**

1.	Verfahren zur Validierung eines Cockpits eines Flugzeugs am Boden, das ein System zur Messung in drei Dimensionen einsetzt, das die dreidimensionale Rekonstitution einer realen Fläche in Azimut-, Erhebungs- und Distanzdarstellung ermöglicht, umfassend einen materiellen Teil, umfassend eine mobile Einheit von zwei Achsen Azimut/Weitwinkelerhebung (12) in Verbindung mit einer Vorrichtung zur Distanzmessung (13), montiert auf einem festen Teil (14), wobei jede Achse mit einem Winkelcodierer (22) versehen ist, der zu jedem Zeitpunkt die Richtung einer Peilung wiedergibt, und einen Softwareteil, umfassend einen Steuerteil am Eingang und einen Erfassungsteil am Ausgang, wobei die mobile Zweiachseneinheit (12) zwei Teile umfasst, die eine Azimutdrehung (25) um eine Achse und eine Erhebungsdrehung (26) um eine andere Achse ermöglicht, wobei jeder Teil einen Motor (21) und einen Winkelcodierer (22) umfasst, wobei der Softwareteil (11) eine Schnittstelle Mensch-Maschine (31), die eine Auswahl von Messparametern und eine Nachbearbeitung ermöglicht, und ein Steuermodul (30) aufweist, umfassend für jede Achse einen Komparator (32), der es ermöglicht, den Vergleich zwischen einem realen Winkel, der von einem Winkelcodierer (22) kommt, und einem Echtzeitsollwert, der von der Schnittstelle Mensch-Maschine (31) kommt, wobei ein Kontroller (33) das Ausgangssignal des Komparators empfängt, und ein Steuermodul des entsprechenden Motors (21), das die Steuerung der Motorphasen liefert, wobei das Verfahren **dadurch gekennzeichnet ist, dass** es umfasst:

	- einen Schritt der Positionierung des materiellen Teils des Systems im Cockpit,
	- einen Schritt der Kalibrierung der Position des Systems, wobei ein bekannter Punkt im Cockpit angepeilt wird und drei Parameter gemessen werden: Azimut, Erhebung und Distanz,
	- einen Schritt der Übereinstimmung von Messpunkten einer realen Fläche des Cockpits eines Flugzeugs am Boden und der Punkte derselben Fläche des Cockpits eines Flugzeugs am Boden, die bereits durch die ursprüngliche Definition CAO definiert wurden,
	- einen Schritt der Eingabe von Messparametern: Messwinkel, geforderte Präzision, Aufzeichnungsformat,
	- einen Schritt der Validierung des Cockpits nach Vergleich von gemessenen Daten mit Hilfe der Distanzmessvorrichtung (13) und der beiden Winkelcodierer (22) und von Echtzeitsollwerten, die von der Schnittstelle Mensch-Maschine (31) stammen.

2.	Verfahren nach Anspruch 1, umfassend:

	- einen neuerlichen Schritt der Positionierung und Kalibrierung, wobei der materielle Teil an einer anderen Position des Cockpits positioniert wird.

3.	Verfahren nach Anspruch 1, bei dem der materielle Teil des Systems an den Wänden oder an der Decke des Cockpits durch eine Vorrichtung mit Saugnapf positioniert wird.

**Claims**

1.	Method for validating an aircraft cockpit on the ground using a three-dimensional measurement system, allowing three-dimensional reconstruction in azimuth, elevation and distance of a real surface, comprising a hardware part having a wide-angle two-axis azimuth/elevation mobile assembly (12) associated with a distance measurement device (13), which are mounted on a fixed part (14), each axis being equipped with an angle encoder (22) delivering at any instant a sighting direction, and a software part having an input control part and an output acquisition part, wherein the two-axis mobile assembly (12) comprises two parts respectively allowing an azimuth rotation (25) about one axis and an elevation rotation (26) about another axis, wherein each part comprises a motor (21) and an angle encoder (22), wherein the software part (11) comprises a man-machine interface (31) allowing measurement value parameter selection and postprocessing, and a driver module (30) comprising, for each axis, a comparator (32) which makes it possible to compare a real angle obtained from an angle encoder (22) and a real-time setpoint obtained from the man-machine interface (31), a controller (33) receiving the output signal of the comparator and a module for driving the corresponding motor (21), which delivers the control of the motor phases, the method being **characterized in that** it comprises:

EP 1 589 354 B1

- a step of positioning the hardware part of the system in the cockpit,
- a step of calibrating the position of the system by sighting a known point in the cockpit and by measuring three parameters: azimuth, elevation and distance,
- a step of setting measurement points of a real surface of the aircraft cockpit on the ground in correspondence with points of the same surface of the aircraft cockpit on the ground which have already be defined by the original CAD definition,
- a step of inputting measurement parameters: measurement angle, required precision, recording format,
- a step of validating the cockpit after comparison of data measured with the aid of the distance measurement device (13) and of the two angle encoders (22) and real-time set points obtained from the man-machine interface (31).

2. Method according to Claim 1, comprising:

- a new step of positioning and calibration by positioning the hardware part in another position of the cockpit.

3. Method according to Claim 1, wherein the hardware part of the system is positioned on the walls or the ceiling of the cockpit by a sucker device.

FIG. 1

FIG. 2

EP 1 589 354 B1

FIG. 3

FRICTION VISQUEUSE

Fs
Fk

FRICTION CINETIQUE

NIVEAU DE FRICTION COULOMB

Ws

FRICTION STATIQUE

EFFET STRIBECK

FIG. 4

Temps (s)

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6590640 B
- WO 9960335 A
- DE 19543299
- FR 2630539